Europäisches Patentamt

European Patent Office

Office européen des brevets

(11) Veröffentlichungsnummer : **0 133 942**
**B1**

(12) **EUROPÄISCHE PATENTSCHRIFT**

(45) Veröffentlichungstag der Patentschrift :
15.04.87

(51) Int. Cl.⁴ : **G 01 N 29/04**

(21) Anmeldenummer : 84108498.1

(22) Anmeldetag : 18.07.84

(54) Spezial-Winkelprüfkopf zur Ultraschallprüfung.

(30) Priorität : 01.08.83 DE 3327736

(43) Veröffentlichungstag der Anmeldung :
13.03.85 Patentblatt 85/11

(45) Bekanntmachung des Hinweises auf die Patenterteilung : 15.04.87 Patentblatt 87/16

(84) Benannte Vertragsstaaten :
CH DE FR GB LI NL SE

(56) Entgegenhaltungen :
DE-A- 2 901 232
FR-A- 1 548 870
GB-A- 745 639
US-A- 3 950 660
Pol Réti "Zerstörungsfreie Werkstoffprüfung", 1974, Hirzel Verlag Stuttgart, S. 196, Abb. 203

(73) Patentinhaber : **KRAFTWERK UNION AKTIENGE-SELLSCHAFT**
**Wiesenstrasse 35**
**D-4330 Mülheim (Ruhr) (DE)**

(72) Erfinder : **Jestrich, Hans-Achim, Dipl.-Ing.**
**An der Hoffnung 36**
**D-4030 Ratingen (DE)**
Erfinder : **Friedrich, Paul**
**Erlanger Strasse 47**
**D-8525 Uttenreuth (DE)**

(74) Vertreter : **Mehl, Ernst, Dipl.-Ing. et al**
**Postfach 22 01 76**
**D-8000 München 22 (DE)**

## Beschreibung

Die Erfindung bezieht sich auf einen Spezial-Winkelprüfkopf zur Ultraschallprüfung, mit mindestens einem US-Schwinger, gemäß Oberbegriff des Anspruchs 1.

Ein Winkelprüfkopf mit den gattungsgemäßen Merkmalen ist z. B. bekannt aus dem Buch «Zerstörungsfreie Werkstoffprüfung» von Pál Réti, S. Hirzel Verlag Stuttgart 1974, Seite 196, Abb. 203.

Haupteinsatzgebiete derartiger Winkelprüfköpfe sind die allgemeine Werkstoffprüfung mit Ultraschall und im besonderen die Schweißnahtprüfung. Aufgrund des schräg zum Lot unter dem Einschallwinkel α einfallenden US-Strahls ist ein Nachweis und eine Bewertung von senkrecht und schräg zur Oberfläche liegenden flächigen Materialtrennungen, wie Rissen und Bindefehlern, möglich. Ein weiteres Anwendungsgebiet der Ultraschallprüfung mit Winkelprüfköpfen ist die Prüfung von auf Wellen aufgeschrumpften Scheibenkörpern im Bereich der Schrumpfsitze und der angrenzenden Materialbereiche, insbesondere im Bereich der Nabeninnenoberflächen und der axialen Verdrehsicherungen bei Radscheiben von Niederdruck-Turbinen-Läufern, wobei die Radscheiben im Querschnitt gesehen von ihrer Nabenpartie in radialer Richtung von innen nach außen sich etwa keulenförmig bis zu einem Radkranz verjüngende Seitenwangen aufweisen. Wie es in der älteren Anmeldung P 33 18 748.7 vom 24.05.1983 derselben Anmelderin im einzelnen erläutert wird, ist die Geometrie solcher Radscheiben für eine Ultraschallprüfung mit US-Prüfköpfen der nicht zugänglichen Nabeninnenoberfläche und der axialen Verdreh-Sicherungen äußerst kompliziert. Dabei stehen als Ankopplungsflächen für die US-Prüfköpfe nur die Seitenwangen der Radscheiben zur Verfügung. Zur Durchführung derartiger Prüfoperationen benötigt man Spezial-Winkelprüfköpfe, die abhängig von der Radscheibengeometrie einen bestimmten Einschallwinkel α und einen bestimmten Schielwinkel δ aufweisen. Man arbeitet dabei nach dem Prinzip der Kantenreflektion von Transversalwellen im Auftreffwinkelbereich der Totalreflektion, der sogenannten Winkelspiegel-Methode, bei der die US-Strahlenbündel auf die Prüfbereiche der Nabeninnenoberfläche ausgerichtet sind, wobei sich Empfangssignale nur im Falle von Ungänzen ergeben. Zur Überprüfung von axialen Verdrehsicherungen kann jedoch auch mit der Methode des streifenden Einfalls gearbeitet werden.

Zur Durchführung dieser Prüfoperationen sind eine Vielzahl von Spezial-Winkelprüköpfen mit unterschiedlichen Paarungen Einschallwinkel/Schielwinkel erforderlich.

Die der Erfindung zugrunde liegende Aufgabe besteht generell darin, die zur Erfüllung der Prüfaufgabe erforderliche Anzahl von Spezial-Winkelprüfköpfen zu reduzieren, damit die Lagerhaltung zu vereinfachen und insgesamt die Prüfkosten zu senken. Im besonderen liegt der Erfindung die Aufgabe zugrunde, einen Spezial-Winkelprüfkopf gemäß Gattungsbegriff so auszubilden, daß im Vergleich zu bekannten Spezial-Winkelprüfköpfen, die in Einzel- bzw. Sonderanfertigung hergestellt werden, die Herstellung wesentlich vereinfacht und verbilligt ist. Es soll ermöglicht sein, daß mit einer relativ kleinen Anzahl von Winkelprüfkopf-Grundtypen mit bestimmten Einschallwinkeln α sich Spezial-Winkelprüfköpfe mit beliebigen, auch ausgefallenen, Schielwinkeln realisieren lassen.

Erfindungsgemäß wird die gestellte Aufgabe mit einem Spezial-Winkelprüfkopf der eingangs genannten Art durch die im Kennzeichen des Anspruchs 1 aufgeführten Merkmale in der Hauptsache gelöst. Vorteilhafte Weiterbildungen sind in den Unteransprüchen 2 bis 18 angegeben. Die mit der Erfindung erzielbaren Vorteile sind vor allem darin zu sehen, daß Gruppen von vorgefertigten Prüfkopf-Subanordnungen mit bestimmten, bei der Prüfung angewendeten Einschallwinkeln α bereit gehalten werden können, die erst durch ihren Einbau in und ihre Zuordnung zu ebenfalls vorgefertigten zweiten Prüfkopfgehäusen ihren endgültigen Schielwinkel δ erhalten. Herstellungs- und montagetechnisch besonders günstig ist eine zylindrische Grundform der Prüfkopf-Subanordnung mit einem zylindrischen, bodenseitig offenen Grundkörper nach Anspruch 2 mit entsprechenden Führungs- und Sitzflächen am Innenumfang des zweiten Prüfkopfgehäuses, weil sich Drehteile einfach und genau herstellen lassen und die Einjustierung des Schielwinkels durch Verdrehung der Subanordnung im zweiten Prüfkopf-Gehäuse ermöglicht ist, wobei durch geeignete Klemmvorrichtungen der eingestellte Schielwinkel fixierbar ist. Es kann vorteilhaft sein, auf der Unterseite des Spezial-Winkelprüfkopfes an einem der beiden zueinander drehjustierbaren Teile von Prüfkopf-Subanordnung einerseits und zweitem Prüfkopfgehäuse andererseits eine Skala und an dem anderen einen Zeiger anzubringen, derart, daß der eingestellte Schielwinkel unmittelbar in Graden ablesbar ist. Der Zeiger kann hierbei auch als Nonius-Skala ausgeführt sein, so daß auch Zehntel-Grade einstellbar sind, wenn man unterstellt, daß dem Nonius eine Gradeinteilung über einen Teil des interessierenden Umfanges von z. B. 90° oder über den Gesamtumfang von 360° gegenüber steht. Dies ist insbesondere für Winkelprüfköpfe mit größeren Abmessungen mit Vorteil zu realisieren ; bei kleineren Abmessungen des Spezial-Winkelprüfkopfes, worunter eine Grundfläche von z. B. 40 × 40 mm verstanden wird, erfolgt die Einstellung des Schielwinkels bereits bei der Montage des fertigen Spezial-Winkelprüfkopfes in der Werkstatt wesentlich genauer mit Feinmeßlehren auf ± 0,1 mm genau, was bei dieser Prüfkopfgröße etwa ± 0,3° Schielwinkel-Toleranz entspricht.

Im folgenden wird anhand der Zeichnung, in der zwei Ausführungsbeispiele der Erfindung dargestellt sind, diese noch näher erläutert. Darin zeigt in vereinfachter Darstellung :

Figur 1 die Draufsicht auf den Boden eines Spezial-Winkelprüfkopfes in schematischer Darstellung, wobei die Subanordnung eines inneren « kleinen » Prüfkopfes in das zweite, äußere Prüfkopfgehäuse um den Schielwinkel δ verdreht eingesetzt ist ;

Figur 2 die Ansicht A aus Fig. 1, woraus der Einschallwinkel erkennbar ist ;

Figur 3 in Draufsicht und

Figur 4 in einem Schnitt längs der Linie IV/IV aus Fig. 3 ein zweites Ausführungsbeispiel für einen Spezialwinkelprüfkopf mit einer topfartigen Prüfkopf-Subanordnung, eingesetzt in entsprechende Führungs- und Sitzflächen am Innenumfang des zweiten, im Grundriß quadratischen Prüfkopfgehäuses ;

Figur 5 die Draufsicht auf den keilförmigen, aus Plexiglas bestehenden Tragkörper für den US-Schwinger nach Fig. 4 ;

Figur 6 in Ansicht und

Figur 7 in Draufsicht den zylindrischen Grundkörper der topfförmigen Subanordnung nach Fig. 3 und 4, wobei in Fig. 7 zusätzlich zwei eingeschraubte Steckerbuchsen dargestellt sind ;

Figur 8 in Draufsicht und

Figur 9 in Seitenansicht ein im Vergleich zu Fig. 3 agbewandeltes zweites Prüfkopfgehäuse, bei welchem die Diagonalen für die Wasseranschlüsse und die Spannschraube mit Blattfeder vertauscht sind und der Schielwinkel δ eine andere Orientierung und Größe hat.

Figur 10 in Draufsicht und

Figur 11 in Ansicht das zweite Prüfkopfgehäuse nach Fig. 8 und Fig. 9, allerdings unter Fortlassung der Spannschraube, der Blattfeder und der Wasseranschlüsse und mit einem Schielwinkel δ, welcher statt 46,5° nunmehr 74,5° beträgt. Die Darstellung der Fig. 10 ist im Vergleich zu derjenigen nach Fig. 8 um 90° im Gegenzeigersinn gedreht ;

Figur 12 in Draufsicht und

Figur 13 in einem Schnitt längs der Linie XIII/XIII aus Fig. 12 eine vierte Variante innerhalb des zweiten Ausführungsbeispieles mit einem Schielwinkel δ = 90° und der Möglichkeit der Befestigung einer Lagerzapfen-Platte ;

Figur 14 in Seitenansicht und

Figur 15 in Draufsicht eine solche Lagerzapfen-Platte, welche dann Verwendung findet, wenn bei einem 90°-Schielwinkel die Position des normalen Lagerzapfens durch einen Markierungsschlitz eingenommen wird ; und

Figur 16 eine Draufsicht auf die Unterseite der Anordnung nach Fig. 8, allerdings bei eingefügter Prüfkopf-Subanordnung und mit einem von δ = 46,5° auf δ = 3° geänderten Schielwinkel.

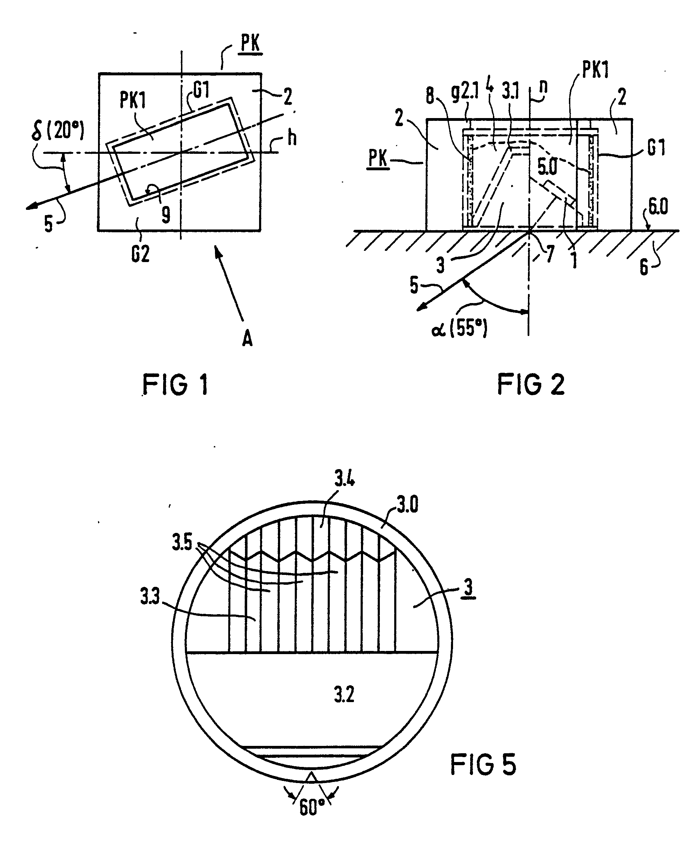

Fig. 1 und Fig. 2 zeigen schematisch das Grundprinzip der Erfindung. Ein US-Schwinger 1 in Form eines piezoelektrischen Ultraschall-Wandlers ist innerhalb einer Gehäuseanordnung 2 auf einem keilförmigen, insbesondere aus Plexiglas bestehenden Tragkörper 3 und unter Verwendung von Dämpfungsmittel 4 so justiert angeordnet und befestigt, daß der US-Strahl 5 des US-Schwingers 1 unter einem Einschallwinkel α ungleich Null, im dargestellten Fall α = 55°, auf die Oberfläche 6.0 eines Prüflings 6 auftrifft. Der Prüfling 6 ist ein Stahlkörper, z. B. die Radscheibe eines Turbinenläufers, welche auf die Welle des Turbinenläufers aufgeschrumpft ist, wobei der Schrumpfsitz auf Risse bzw. Ungänzen untersucht werden muß. Den Einschallwinkel α bezieht man auf das im Strahlauftreffpunkt auf die Prüflingsoberfläche gefällte Lot n, auch als Prüfkopfnormale zu bezeichnen. Der US-Strahl 5 ist eine Transversalwelle, auch Schubwelle genannt, welche im Brechungspunkt 7, zugleich Auftreffpunkt, entsteht, wenn der US-Ausgangsstrahl 5.0 des US-Schwingers 1 vom relativ dünneren Medium des Plexiglaskeils 3 in das relativ dichtere Medium des Prüflings 6 aus Stahl übertritt und so vom Lot n weg gebrochen wird. Auf naturgetreue Wiedergabe der Brechungswinkel wurde nicht geachtet ; es handelt sich lediglich um ein schematisches Beispiel zur Erklärung. Da der US-Strahl 5 mit dem Einschallwinkel α größer als Null in den Prüfling 6 eintritt, handelt es sich um einen Winkelprüfkopf. Es handelt sich darüber hinaus um einen Spezial-Winkelprüfkopf, da, wie es Fig. 1 zeigt, der US-Strahl außerdem unter einem Schielwinkel δ auf die Prüflingsoberfläche 6.0 auftrifft. Der Schielwinkel δ ist durch den Winkel definiert, der bei Draufsicht in Richtung des Lotes n auf den Prüfkopf PK zwischen einer Prüfkopf-Hauptachse h, auch als Prüfkopf-Bezugsachse zu bezeichnen, und dem US-Strahl 5 aufgespannt wird. Grundsätzlich kann δ im Bereich zwischen Null und 360° liegen. Im dargestellten Fall beträgt δ = 20°. Vorstehend, wie auch im folgenden wird für die Bezeichnung Ultraschall-Schwinger durchweg die Abkürzung US-Schwinger verwendet ; er kann aus Blei-Zirkonat, Barium-Titanat oder Quarz bestehen, um nur einige piezokristalline Materialien zu nennen. Der Tragkörper 3 besteht bevorzugt aus Plexiglas oder Acrylglas. Seine Keilform bestimmt den Einschallwinkel. Er stellt eine Vorlaufstrecke für den US-Strahl dar, welcher ursprünglich eine Longitudinalwelle, auch als Long- oder Druckwelle bezeichnet, ist, wobei infolge der Brechung im Bereich 7 die Transversalwelle für den US-Strahl 5 entsteht. Tragkörper 3 und Dämpfungsmasse 4 sind von einem Korkhemd 8 umgeben, welches ebenfalls der Dämpfung dient. Der Streuung unerwünschter US-Strahlen dient eine im Querschnitt zickzackartige Riffelung 3.1 an der Schräg- und an der Deckfläche des Tragkörpers 3.

Erfindungsgemäß besteht nun der Spezialwinkelprüfkopf PK aus einer eine vorgefertigte Einheit bildenden Prüfkopf-Subanordnung PK1, deren US-Schwinger 1 mit dem vorgegebenen Einschallwinkel α innerhalb des zugehörigen ersten Prüfkopfgehäuses G1 befestigt ist. Der Spezial-Winkelprüfkopf PK (im folgenden vereinfachend als Prüfkopf benannt) besteht ferner aus einem die Prüfkopf-Subanordnung PK1 auf-nehmenden zweiten Prüfkopfgehäuse G2, in-nerhalb dessen die Prüfkopf-Subanordnung PK1 unter einem vorgegebenen Schielwinkel δ, und zwar unter mindestens einem solchen Schielwinkel, zur Bildung der Gesamtanordnung des Prüfkopfes PK befestigt ist. Auf diese Weise können aus einer Mehrzahl von Prüfkopf-Subanordnungen PK1 jeweils gleichen Einschallwinkels α durch Zusammenbau derselben mit zweiten Prüfkopfgehäusen G2 in unterschiedlicher Schielwinkelrelation (Gesamt-)Prüfköpfe PK mit unterschiedlichen, vorgegebenen Schielwinkeln δ hergestellt werden. Im ersten Ausführungsbeispiel nach Fig. 1 und 2 hat die Prüfkopf-Subanordnung PK1 einen rechteckigen Grundriß bzw. stellt einen Quader da, und dementsprechend ist zur Aufnahme dieses Quaders im zweiten Prüfkopfgehäuse G2 eine entsprechende prismatische, im Grundriß rechteckige Aussparung 9 vorgesehen. An der Deckseite des zweiten Prüfkopfgehäuses G2 wird diese Aussparung 9 von einem Kragen g 2.1 übergriffen, welcher eine Anschlag- bzw. Sitzfläche beim Einschieben der Subanordnung PK1 von der Bodenseite her bildet. Die Subanordnung PK1 wird dann in ihrer Einbaulage fixiert, z. B. durch nichtdargestellte, querorientierte Klemmschrauben, welche das zweite Gehäuse G2 durchdringen.

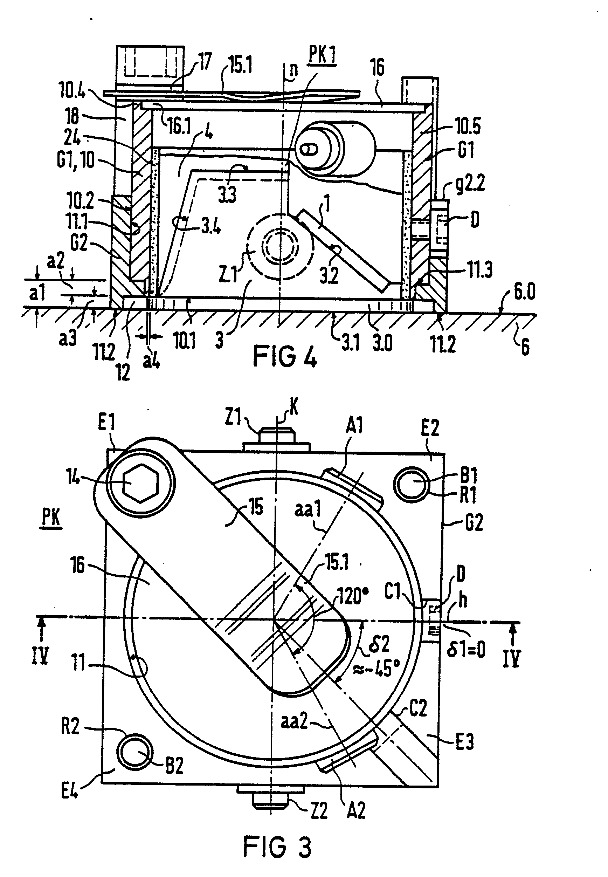

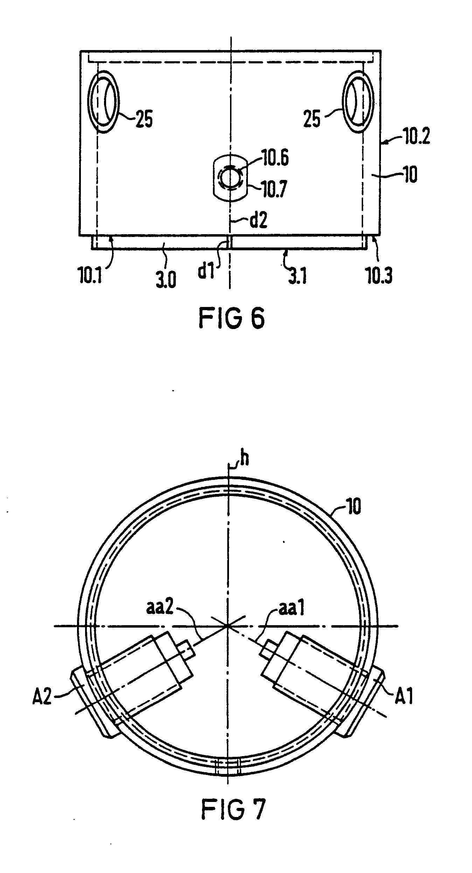

Im zweiten Ausführungsbeispiel nach Fig. 3 bis 7 weist das erste Prüfkopfgehäuse G1 einen zylindrischen, bodenseitig offenen Grundkörper 10 auf, vergleiche auf Fig. 6 und 7, durch dessen Bodenöffnung 10.1 der Tragkörper 3 mit einer Ankopplungsfläche 3.1 hindurchragt. Letztere stellt die Unterseite eines Bodenflansches 3.0 des Tragkörpers 3 dar. Das zweite Prüfkopfgehäuse G2 weist dem Außenumfang des zylindrischen Grundkörpers 10 entsprechende zylindrische Führungsflächen 11.1, Bodengleitflächen 11.2 sowie demgegenüber prüfkopfaxial (in Richtung n) beabstandete Sitzflächen 11.3 auf. Die Prüfkopf-Subanordnung PK1 ist mit dem zylindrischen Außenumfang 10.2 des Grundkörpers 10 in die Führungsflächen 11.1 am Innenumfang des zweiten Prüfkopfgehäuses G2 unter Einstellung der vorgegebenen Schielwinkel-Drehrelation, wie dar-gestellt, eingefügt und ist mit frontseitigen Ringschulterflächen 10.3 mit den Sitzflächen 11.3 unter Bildung eines bodenseitigen Ringspaltes 12 für Ankopplungsflüssigkeit in Eingriff gebracht und in dieser eingesetzen Lage arretiert. In Fig. 3 sind zwei Schielwinkel eingetragen. Der Schielwinkel δ 1 = Null (Winkelschenkel deckungsgleich mit Bezugsachse h) wurde lediglich der Schnittdarstellung in Fig. 4 wegen gewählt ; in Wirklichkeit ist der Schielwinkel δ 1 = Null nur ein Sonderfall und es wird mit Schielwinkeln größer als Null gearbeitet, z. B. mit δ 2 = — 45°. Das Mi-nuszeichen wurde für Schielwinkel gewählt, die sich relativ zur Bezugsachse h im Uhrzeigersinn aufspannen, wogegen die kein Vorzeichen tragenden positiven Winkel sich im Gegenuberzeigersinn aufspannen.

In Fig. 3 bis 7 sind gleiche oder analoge Teile zu Fig. 1 und 2 auch mit den gleichen Bezugszeichen versehen, so der keilförmige Tragkörper 3, die Dämpfungsmasse 4, der US-Schwinger 1 usw. Der keilförmige Tragkörper 3 ist in Fig. 5 noch einmal gesondert in Draufsicht dargestellt. Von seinem bodenseitigen Ringflansch 3.0 erhebt sich der Tragkörper mit einer schrägen Pultfläche 3.2, auf welcher der US-Schwinger 1 (Fig. 4) in Form eines Rechteck- oder Quadratplättchens befestigt, insbesondere festgeklebt ist. Etwa auf der anderen Hälfte des kreisförmigen Grundrisses befindet sich eine gerippte Plateaufläche 3.3, welche steil über die Steilhangfläche 3.4 zum bodenseitigen Ringflansch 3.0 abfällt. Die im Querschnitt V- bzw. zickzack-förmigen Rippen 3.5 dienen der Streuung von divergierenden US-Strahlen, durch welche der Hauptstrahl nicht gestört werden darf.

Das zweite Prüfkopfgehäuse G2 (siehe insbes. Fig. 3) ist ein prismatischer Rechteckkörper, der eine mittige zylindrische Öffnung 11 für die Führungsflächen 11.1 und Sitzflächen 11.3 (Fig. 4) aufweist. In seinen Eckenbereichen, die mit E1 bis E4 bezeichnet sind, sind mindestens zwei Durchgangsbohrungen B1 und B2 mit nach oben ragenden Rohrstutzen (oder Nippeln) R1 und R2 zum Anschluß (nicht dargestellten) Ankopp-lungsflüssigkeits-Zuleitungen angeordnet. Ins-besondere weist das zweite Prüfkopfgehäuse G2 einen quadratischen Grundriß, wie in Fig. 3 dargestellt, auf. Eine solche Form ist punktsymmetrisch, d. h., in Anpassung an den kreisförmigen Grundriß der Subanordnung PK1 besonders günstig, insbesondere, weil alle Eckenbereiche E1 bis E4 zueinander gleichberechtigt sind.

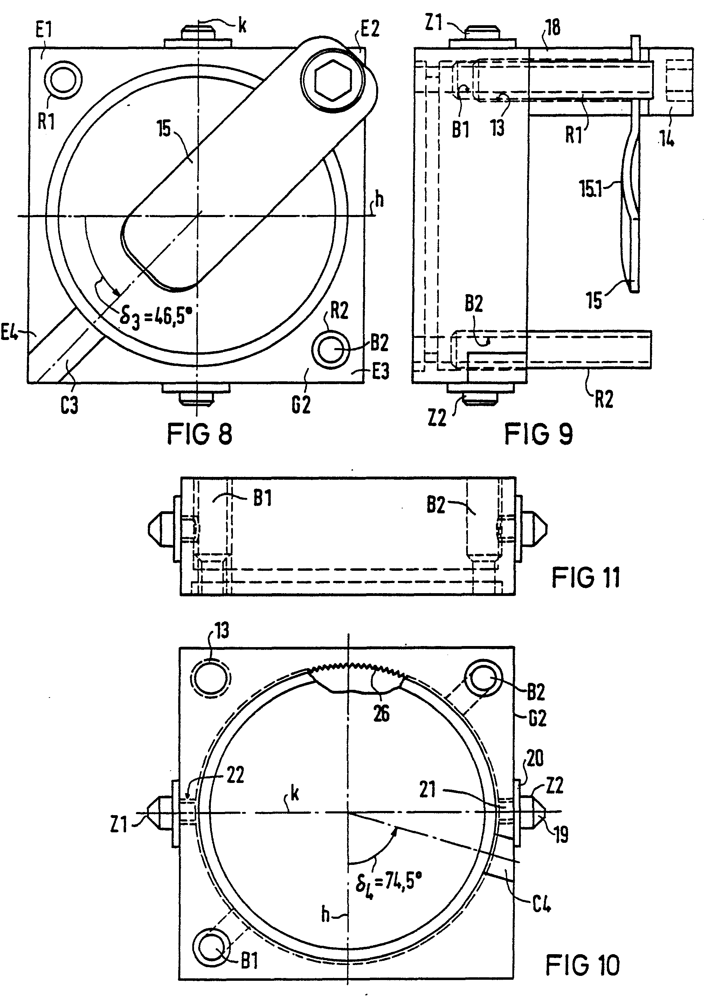

Besonders günstig ist es, wenn die Befestigungsbohrungen B1, B2 und die in sie eingesetzten Rohrstutzen R1, R2 einander diagonal gegenüberliegen. Im dargestellten Fall der Fig. 3 sind sie innerhalb der Eckenbereiche E2, E4 angeordnet. Im Bereich der Ecke E1 ist die aus Fig. 3, 4 nicht näher ersichtliche, aber in Fig. 10 erkennbare Sackloch-Gewindebohrung 13 für die Spannschraube 14 einer Niederhaltefeder 15 angeordnet. Letztere ist als vorgewölbte Blattfeder mit einer Stärke von z. B. 1 mm ausgebildet, welche mit einem balligen Teil 15.1 ihres freien Endes mittig an der Oberseite der Prüfkopf-Subanordnung PK1, und zwar an deren Deckel 16, angreift und mit einer Bohrung ihres anderen Endes spannbar auf dem Schaft der Spannschraube 14 sitzt, wobei noch eine Scheibe 17 zwischen Kopf der Spannschraube 14 und der Blattfeder 15 eingefügt ist und auf der anderen Seite der Blattfeder 15 noch eine Abstandshaltebuchse 18 die Blattfeder 15 in vorgegebenen Abstand zur Deckfläche g2.2 des zweiten Gehäuses G2 hält. Die Spannschraube 14 ist also im Bereich einer von Durchgangsbohrungen für Ankopplungsflüssigkeit freien Ecke des zweiten Gehäuses G2 verankert.

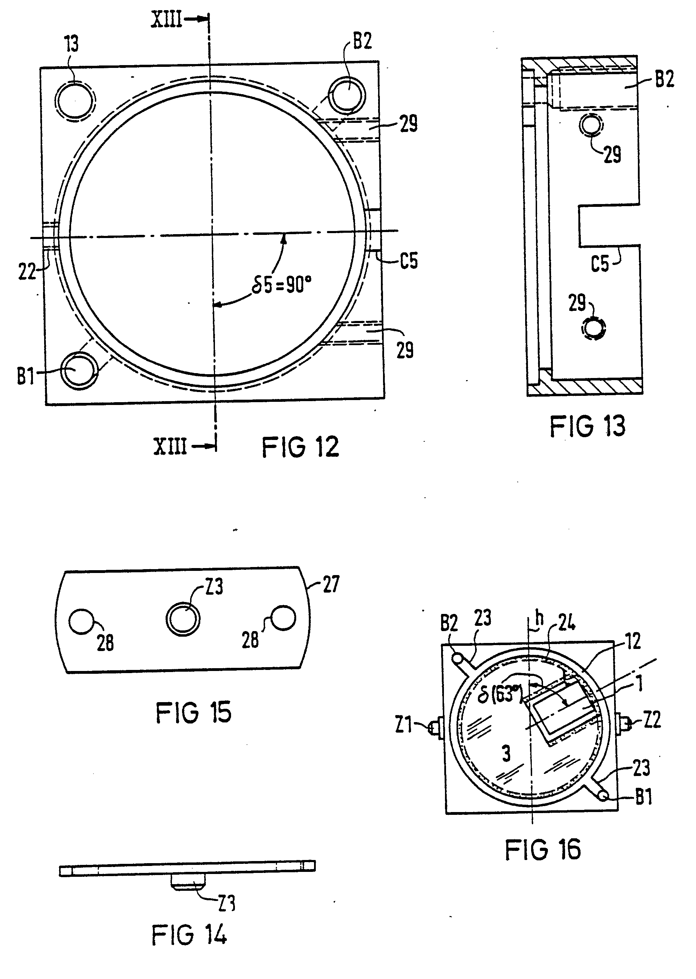

Die Bezugsachse h des Prüfkopfes PK bzw. der Subanordnung PK1 wird unter einem rechten Winkel geschnitten von der Gelenkachse k für die kardanische Lagerung des Prüfkopfes, wobei in der Gekenkachse k auf zwei gegenüberliegenden Seiten des zweiten Gehäuses G2 einander gegenüberliegend die beiden Gelenkzapfen Z1 und Z2 angeordnet sind. Letztere bestehen, vgl. Fig. 10 und 11, aus dem angefasten Zapfen 19, einem Anschlagkragen 20 und einem Gewindeschaft 21 zum Einschrauben in entsprechende Gewingebohrungen 22.

Wie es Fig. 11 in Verbindung mit Fig. 16 zeigt, kommunizieren die Mündungen der Durchgangsbohrungen B1 und B2 mit dem bodenseitigen Ringspalt 12 für die Ankopplungsflüssigkeit über etwa radial verlaufende Verbindungskanäle 23.

Aus Fig. 16 ebenso wie aus Fig. 4 ist noch eine zylindrische Korkwand 24 erkennbar, welche den Tragkörper 3 und die Dämpfungsmasse 4 umgibt und als Zwischenschicht zur Wand des ersten Gehäuses G1 dient. Auf der Oberseite ist der Grundkörper 10 des Gehäuses G1 durch den schon erwähnten Deckel 16 geschlossen, welcher mit einem stufenförmig abgesetzten Rand 16.1 genau in einen Ringabsatz 10.4 am oberen Ende des Grundkörpers 10 paßt. Vor dem Einsetzen des Deckels 16 werden noch die (nicht dargestellten) Schaltelemente einer Spule und eines Abgleichwiderstandes an den US-Schwinger angeschlossen, und es wird die Lötverbindung zu den beiden Anschlußbuchsen A1, A2 hergestellt. Die nicht von Dämpfungsmasse ausgefüllten Hohlräume im Inneren des Grundkörpers 10 können dann mit einem Epoxydharz versehen werden, und der Deckel 16 wird dann aufgesetzt und mittels des Epoxidharzes dichtend verbunden und fixiert. Der bodenseitige Ringflansch 3.0 des Tragkörpers hat einen geringen Überstand a4 im Vergleich zum Innendurchmesser des Grundköpers 10, so daß beim Einschieben des Tragkörpers durch die Öffnung 10.1 ein definierter Anschlag gegeben ist.

Die fertige Sub-Anordnung PK1 kann dann von oben in die Führungs- und Sitzflächen 11.1, 11.3 des zweiten Gehäuses G2 eingeschoben werden. Dabei ist die Anordnung so getroffen, daß die Sitzflächen 11.3 des zweiten Gehäuses G2 an einem umlaufenden Innenbund oder Ringkragen sitzen und einen Axialabstand a1 von den Bodengleitflächen 11.2 bzw. der Prüflingsoberfläche 6.0 haben. Die Summe aus der Ringschulterhöhe a2 (vgl. Fig. 4) des Grundkörpers 10 und der Stärke a3 des aus dem Grundkörper 10 hervorstehenden, die Ankopplungsfläche aufweisenden Tragkörperfußes 3.0 ist gleich dem genannten Axialabstand a1, so daß sich ein bündiger Abschluß der Bodengleitflächen 11.2 mit der Ankopplungsfläche 3.1 ergibt, abgesehen von dem Ringspalt 12 für die Ankopplungsflüssigkeit, von welchem ausgehend die gesamte Ankopplungsfläche 3.1 mit einem dünnen Wasserfilm benetzt werden kann.

Wie man es aus Fig. 4 erkennt, wird die Sub-Anordnung PK1 nur auf einem Teil ihrer Höhe vom zweiten Prüfkopfgehäuse G2 umfaßt, so daß oberhalb dieses zweiten Gehäuses G2 in der Wand des überstehenden freien Mantelbereiches 10.5 des Grundkörpers 10 mindestens eine Anschluß-Steckerbuchse A1 bzw. A2 für den US-Schwinger 1 befestigt werden kann. Besonders günstig ist es, wenn mindestens zwei zueinander parallel geschaltete Steckerbuchsen A1, A2 (vgl. Fig. 3) an zwei verschiedenen Stellen des Grundkörper-Umfanges an diesem derart befestigt sind, daß bei einer schielwinkelbedingten Verdeckung der einen Steckerbuchse A1 (A2) die andere A2 (A1) noch zugänglich ist. Dargestellt ist ein Zentriwinkel zwischen den beiden radial orientierten Achsen aa.1, aa.2 der Steckerbuchsen A1, A2 von 120° (vgl. auch die Darstellung in Fig. 6 und 7, wobei in Fig. 6 die radialorientierten Bohrungen für die Steckerbuchsen mit 25 bezeichnet sind). Je nach Größe des Schielwinkels δ kann es nämlich passieren, daß eine der Steckerbuchsen in den Umfangswinkelbereich der Spannschraube 14 oder einer der Rohrstutzen R1, R2 gelangt. Da die Teilung der Rohrstutzen R1, R2 und des Gewindesackloches 13 für die Spannschraube 14 jeweils 90° bzw. ein Viertel eines Umfanges beträgt, bleibt somit im Überdeckungsfalle einer Steckerbuchse immer noch die andere für Anschlußzwecke frei, weil diese zur ersten Steckerbuchse einen Umfangswinkel von 120° bildet. Die Spannschraube 14 ist bevorzugt eine Inbusschraube mit Zylinderkopf, wie dargestellt, desgleichen ist es vorteilhaft, den Fixierzapfen D (Fig. 3, Fig. 4), mit dem die Drehwinkelstellung der Sub-Anordnung PK1 innerhalb des zweiten Gehäuses G2 zur Definition des Schielwinkels δ festgelegt wird, als Inbusschraube auszuführen.

Wesentliche Bedeutung kommt der genauen Einstellung und Fixierung des Schielwinkels δ zu. Wie es Fig. 6 und 7 zeigen, hat der kreisscheibenförmige Tragkörperfuß 3.0 an seinem Umfang eine Marke d1, die z. B. als eine Einkerbung ausgeführt ist. Diese dient zur Markierung der Bezugsachse h bzw. der δ = Null-Position. Der Grundkörper 10 trägt nun in seinem unteren Umfangsbereich eine entsprechende Gegenmarke d2, ebenfalls in Form einer Einkerbung oder eines Skalenstriches. In montierten Zustand der Sub-Anordnung PK1 müssen Marke d1 und Gegenmarke d2 zur Deckung gebracht sein, wie es Fig. 6 zeigt. An exakt der gleichen Umfangsstelle, wie sie die Gegenmarke d2 einnimmt, trägt der Mantel des Grundkörpers 10 eine radiale Gewindebohrung 10.6, wobei die Mantelflächen außen mit einer Plansenkung 10.7 versehen sind. In dieser Gewindebohrung 10.6 wird der Fixierzapfen in Form der Inbusschraube D (Fig. 3, 4) eingeschraubt, wobei sich der zylindrische Kopf der Inbusschraube D mit seiner Unterseite gegen die Plansenkung 10.7 legt. In der Werkstatt werden nun eine Reihe von zweiten Prüfkopfgehäusen G2 angefertigt, die an sich im Prinzip völlig gleichartig sind, jedoch an unterschiedlichen Stellen ihres Umfanges mit einem von einer der gewünschten Schielwinkelgröße entsprechenden Stelle der Führungsflächen 11.1 ausgehenden, radial verlaufenden Einschnitt C

versehen werden, welcher so bemessen ist, daß der Zylinderkopf der Inbusschraube D genau, d. h. möglichst spielfrei in den Einschnitt paßt. In Fig. 3 ist ein solcher Einschnitt C1 für den Schielwinkel $\delta 1$ = Null und weiterhin ein Einschnitt C2 für den schon erwähnten Schielwinkel $\delta 2 = -45°$ dargestellt. Aus fertigungstechnischen Gründen ist es vorteilhaft, wenn die Einschnitte, generell mit C bezeichnet, durchgehend ausgestaltet sind.

Fig. 8 und 9 zeigen im Vergleich zu den Figuren 3 bis 7 ein zweites Prüfkopfgehäuse G2, welches zur Aufnahme einer Sub-Anordnung PK1 mit einem Schielwinkel $\delta 3$ = 46,5° vorgesehen ist; der Einschnitt ist mit C3 bezeichnet und liegt fast genau auf einer der Ecken. Man erkennt weiter, daß die Diagonalen für die Blattfeder 15 und die Rohrstutzen R1, R2, miteinander vertauscht sind, weil der Eckenbereich E4 bereits durch den Einschnitt C3 belegt ist und für eine Bohrung B2 nicht mehr zur Verfügung steht.

Fig. 9 zeigt noch einmal die Gesamtanordnung des zweiten Gehäuses G2 ohne die Sub-Anordnung PK1 mit ihren Einzelteilen.

Bei der Variante nach Fig. 10 und 11 ist der Einschnitt C4 innerhalb des zweiten Gehäuses G2 so angeordnet, daß ein Schielwinkel von $\delta_4$ = 74,5° realisiert wird, wenn eine Sub-Anordnung in das zweite Gehäuse G2 eingefügt wird. Die Diagonalen für die Rohrstutzen R1, R2 bzw. Durchgangsbohrungen B1, B2 sind so wie in Fig. 8 angeordnet. Innerhalb eines Ausschnittes ist in Fig. 10 schematisch dargestellt, daß das zweite Prüfkopfgehäuse G2 an seinen Führungsflächen mit einer Gegenzahnteilung 26 versehen sein kann, mit welcher eine Zahnteilung auf dem Außenumfang des Grundkörpers 10 der Sub-Anordnung PK1 in einer Vielzahl von Winkelrelativstellungen in Eingriff gebracht werden kann, wobei die Anzahl der Relativstellungen durch die Anzahl der Zähne bzw. die Feinheit der Zahnteilung bestimmt ist. Z. B. könnte der Schielwinkel entsprechend einer solchen Zahnteilung in Winkelschritten von 5° veränderbar und festlegbar sein. Im Falle einer solchen Zahnteilung würde sich ein Fixierungszapfen bzw. die zugehörige Inbusschraube D erübrigen. Die Verdrehsicherung ergibt sich durch die Zahnteilung. Aber auch ohne eine gesonderte Verdrehsicherung, sei es in Form der Gegenzahnteilung 26 und der (nicht dargestellten) Zahnteilung oder ohne die dargestellte Verdrehsicherung Einschnitt C-Fixierzapfen D reichen die elastischen Andruckkräfte, welche von der gespannten Blattfeder in Achsrichtung des Prüfköpfes PK ausgeübt werden, aus, um ein unerwünschtes Verdrehen oder Verändern des Schielwinkels zu verhindern. Die Verdrehsicherungen sind gleichwohl aus Sicherheitsgründen nötig, weil ein unbeabsichtigtes Lockern der Spannschraube 14 nie ganz auszuschließen ist und weil eine De- und Re-Montage der Sub-Anordnung aus dem zweiten Gehäuse gewährleistet sein muß, ohne daß der Schielwinkel aufs neue eingestellt werden müßte.

Fig. 12 bis Fig. 14 zeigen noch eine Prüfkopfvariante, bei welcher der Einschnitt C5 einen Schielwinkel $\delta_5$ von 90° definiert. Da dieser Einschnitt C5 genau im Umfangsbereich einer Gewindebohrung für einen Gelenkzapfen Z1 bzw. Z2 liegt, ist gemäß Fig. 13 bis 15 ein gesondertes Gelenkplättchen 27 vorgesehen. Das Gelenkplättchen 27 weist einen mittigen Zapfen Z3 auf, der die Form der Normalzapfen Z1, Z2 hat, und außerdem an seinen beiden Enden je eine Befestigungsbohrung 28, mit welchen das Plättchen 27 seitlich mittels geeigneter (nicht dargestellter) Befestigungsschrauben an die den Einschnitt C5 aufweisende Seitenwand des zweiten Gehäuses G2 angeschraubt werden kann, wozu geeignete Gewindebohrungen 29 im zweiten Gehäuse G2 vorgesehen sind.

Besonders hervorzuheben ist noch, daß Führung und Anschlag der Sub-Anordnung PK1 innerhalb des zweiten Gehäuses G2 einfach und sehr genau sind. Die Schielwinkel-Justierung durch den Eingriff Fixierzapfen-Einschnitt ist kräftefrei, d. h. nicht mit den Befestigungselementen kombiniert. Damit bleibt die Einstellgenauigkeit auch bei häufigem Wechsel der Sub-Anordnung PK1 erhalten. Es läßt sich jeder beliebige Schielwinkel realisieren. Für labormäßigen bzw. Versuchsaufbau kann unter Umständen auf die Schielwinkelfixierung mittels Fixierzapfen verzichtet werden. Alle Teile bei der Sub-Anordnung PK1 und dem zweiten Gehäuse G2 sind gleich bis auf den Keilwinkel des Tragkörpers, durch den der Einschallwinkel $\alpha$ bestimmt ist, und die Anordnung des Einschnittes C im zweiten Gehäuse, wobei unter Umständen ein Gelenk- oder Lagerplättchen 27 in Sonderfällen Verwendung finden muß. Die Wasseranschlüsse sind einfach, weil die Rohrstutzen B1, B2 nicht abgewinkelt sind. Die Wasserrinne am Boden des Prüfkopfes oder der Prüfkopfsohle entsteht durch Einschieben der Sub-Anordnung in das zweite Gehäuse G2. Diese Wasserrinne oder dieser Ringspalt für die Ankopplungsflüssigkeit ist dadurch leicht zu reinigen. Durch den Abschlußdeckel 16 wird eine lückenlose Abschirmung des US-Schwingers und der zugehörigen Schaltelemente und Leitungen gewährleistet. Der Schallaustrittspunkt des Gesamtprüfkopfes bleibt bei Verdrehung der Sub-Anordnung PK1 zur Einstellung unterschiedlicher Schielwinkel immer erhalten, da er im Drehmittelpunkt angeordnet ist. Die Blattfederhalterung könnte man auch als Klemmbügelbefestigung bezeichnen; sie gewährleistet ein einwandfreies Festhalten der Sub-Anordnung, auch bei Vibrationen, ohne daß unerwünschte Kräfte auf das Innere der Sub-Anordnung ausge-üßt werden.

**Patentansprüche**

1. Spezial-Winkelprüfkopf zur Ultraschallprüfung, mit mindestens einem US-Schwinger (1), der in einer Gehäuseanordnung (2) auf einem keilförmigen, insbesondere aus Plexiglas bestehenden Tragkörper (3) und unter Verwendung von Dämpfungsmittel (4) so justiert angeordnet und befestigt ist, daß der US-Strahl (5) des US-Schwingers unter einem Einschallwinkel $\alpha \neq 0$, bezogen auf das im Strahlauftreffpunkt auf die Prüflingsoberfläche (6.0) gefällte Lot (Prüfkopfnormale n) auf die Prüflingsoberfläche auftrifft und daß der US-Strahl ferner unter einem Schielwinkel δ auf die Prüflingsoberfläche auftrifft, der durch den Winkel definiert ist, der bei Draufsicht in Richtung des Lotes auf den Prüfkopf zwischen einer Prüfkopf-Hauptachse (Prüfkopf-Bezugsachse h) und dem US-Strahl aufgespannt wird, wobei $0 \leqslant \delta \leqslant 360°$, dadurch gekennzeichnet, daß der Spezial-Winkelprüfkopf (PK) aus einer eine vorgefertigte Einheit bildenden Prüfkopf-Subanordnung (PK1) besteht, deren US-Schwinger (1) mit einem vorgegebenen Einschallwinkel (α) innerhalb eines zugehörigen ersten Prüfkopfgehäuses (G1) befestigt ist, und aus einem die Prüfkopf-Subanordnung (PK1) aufnehmenden zweiten Prüfkopfgehäuse (G2) besteht, innerhalb dessen die Prüfkopf-Subanordnung (PK1) unter mindestens einem vorgegebenen Schielwinkel (δ) zur Bildung der Gesamtanordnung des Spezial-Winkelprüfkopfes (PK) befestigbar ist, so daß aus einer Mehrzahl von Prüfkopf-Subanordnungen (PK1) jeweils gleichen Einschallwinkels (α) durch Zusammenbau derselben mit weiteren Prüfkopfgehäusen (G2) in unterschiedlicher Schielwinkelrelation Spezial-Winkelprüfköpfe (PK) mit unterschiedlichen, vorgegebenen Schielwinkeln herstellbar sind.

2. Spezial-Winkelprüfkopf zur Ultraschallprüfung nach Anspruch 1, dadurch gekennzeichnet, daß das erste Prüfkopfgehäuse (G1) einen zylindrischen, bodenseitig offenen Grundkörper (10) aufweist, durch dessen Bodenöffnung (10.1) der Tragkörper (3) mit einer Ankopplungsfläche (3.1) hindurchragt, daß das zweite Prüfkopfgehäuse (G2) dem Außenumfang des zylindrischen Grundkörpers (10) entsprechende zylindrische Führungsflächen (11.1), Bodengleitflächen (11.2) sowie demgegenüber prüfkopfaxial beabstandete Sitzflächen (11.3) aufweist und daß die Prüfkopf-Subanordnung (PK1) mit dem zylindrischen Außenumfang des Grundkörpers (10) in die Führungsflächen (11.1) des zweiten Prüfkopfgehäuses (G2) unter Einstellung der vorgegebenen Schielwinkel-Drehrelation einfügbar und mit frontseitigen Ringschulterflächen (10.3) mit den Sitzflächen (11.3) unter Bildung eines bodenseitigen Ringspaltes (12) für Ankopplungsflüssigkeit in Eingriff bringbar und in dieser eingesetzten Lage arretierbar ist.

3. Spezial-Winkelprüfkopf zur Ultraschallprüfung nach Anspruch 2, dadurch gekennzeichnet, daß das zweite Prüfkopfgehäuse (G2) ein prismatischer Rechteckkörper ist, der eine mittige zylindrische Öffnung für die Führungs- und Sitzflächen (11.1, 11.3) aufweist, und daß in seinen Eckenbereichen (E1 bis E4) mindestens zwei Durchgangsbohrungen (B1, B2) mit nach oben ragenden Rohrstutzen (R1, R2) oder Nippeln zum Anschluß von Ankopplungsflüssigkeits-Zuleitungen angeordnet sind.

4. Spezial-Winkelprüfkopf zur Ultraschallprüfung nach Anspruch 3, dadurch gekennzeichnet, daß das zweite Prüfkopfgehäuse (G2) einen quadratischen Grundriß aufweist.

5. Spezial-Winkelprüfkopf zur Ultraschallprüfung nach Anspruch 3 oder 4, dadurch gekennzeichnet, daß die Rohrstutzen (R1, R2) einander diagonal gegenüberliegen.

6. Spezial-Winkelprüfkopf zur Ultraschallprüfung nach einem der Ansprüche 2 bis 5, dadurch gekennzeichnet, daß die Sitzflächen (11.3) des zweiten Prüfkopfgehäuses (G2) an einer als Innenbund umlaufender Ringschulter sitzen und einen Axialabstand (a1) von den Bodengleitflächen (11.2) bzw. der Prüflingoberfläche (6.0) haben und daß die Summe aus der Ringschulterhöhe (a2) des Grundkörpers (10) und der Stärke (a3) des aus dem Grundkörper (10) hervorstehenden, die Ankopplungsfläche (3.1) aufweisenden Tragkörperfußes (3.0) gleich dem genannten Axialabstand (a1) ist, so daß sich ein bündiger Abschluß der Bodengleitflächen (11.2) mit der Ankopplungsfläche (3.1) ergibt.

7. Spezial-Winkelprüfkopf zur Ultraschallprüfung nach einem der Ansprüche 2 bis 6, dadurch gekennzeichnet, daß der Grundkörper (10) an seiner Oberseite durch einen Deckel (16) flüssigkeitsdicht abgeschlossen und abgeschirmt ist.

8. Spezial-Winkelprüfkopf zur Ultraschallprüfung nach einem der Ansprüche 2 bis 7, dadurch gekennzeichnet, daß die Prüfkopf-Subanordnung (PK1) durch mindestens eine, auf ihre Oberseite bzw. ihren Deckel (16) drückende spannbare Niederhaltefeder (15) gegen die Sitzflächen (11.3) gehalten und daß eine Spannschraube (14) der Niederhaltefeder (15) im Bereich einer von Durchgangsbohrungen für Ankopplungsflüssigkeit freien Ecke (E1 bzw. E2) des zweiten Prüfkopfgehäuses (G2) in einem Gewindesackloch (13) verankert ist.

9. Spezial-Winkelprüfkopf zur Ultraschallprüfung nach Anspruch 8, dadurch gekennzeichnet, daß die Niederhaltefeder (15) als vorgewölbte Blattfeder ausgebildet ist, welche mit einem balligen Teil (15.1) ihres freien Endes mittig an der Oberseite der Prüfkopf-Subanordnung (PK1) angreift und mit einer Bohrung ihres anderen Endes spannbar auf dem Schaft der Spannschraube (14) sitzt.

10. Spezial-Winkelprüfkopf zur Ultraschallprüfung nach einem der Ansprüche 2 bis 9, dadurch gekennzeichnet, daß die Prüfkopf-Subanordnung (PK1) nur auf einem Teil ihrer Höhe vom zweiten Prüfkopfgehäuse (G2) umfaßt ist und daß in der Wand des überstehenden freien Mantelbereiches des Grundkörpers (10) mindestens eine Anschluß-Steckerbuchse (A1, A2) für den US-Schwinger (1) befestigt ist.

11. Spezial-Winkelprüfkopf zur Ultraschallprüfung nach Anspruch 10, dadurch gekennzeichnet, daß mindestens zwei parallel geschaltete Anschluß-Steckerbuchsen (A1, A2) an zwei verschiedenen Stellen des Grundkörper-Umfanges an diesem derart befestigt sind, daß bei einer schielwinkelbedingten Verdeckung der einen Steckerbuchse (A1 bzw. A2) die andere (A2 bzw. A1) noch zugänglich ist.

12. Spezial-Winkelprüfkopf zur Ultraschallprüfung nach Anspruch 11, gekennzeichnet durch einen Zentriwindel zwischen den radial orientierten Achsen der Steckerbuchsen (A1, A2) von ca. 120°.

13. Spezial-Winkelprüfkopf zur Ultraschallprüfung nach einem der Ansprüche 1 bis 12, dadurch gekennzeichnet, daß der insbesondere kreisscheibenförmige Tragkörperfuß (3.0) an seinem Umfang eine Marke (d1), z. B. eine Einkerbung, zur Markierung der Prüfkopfbezugsachse bzw. der $\delta = 0°$-Position aufweist und daß der Grundkörper (10) in seinem unteren Umfangsbereich eine entsprechende Gegenmarke (d2) trägt, wobei im montierten Zustand der Prüfkopf-Subanordnung (PK1) Marke (d1) und Gegenmarke (d2) zur Deckung gebracht sind.

14. Spezial-Winkelprüfkopf zur Ultraschallprüfung nach Anspruch 13, dadurch gekennzeichnet, daß an der Umfangsstelle der Gegenmarke (d2) der Grundkörper (10) außerdem mit einem radial orientierten Vorsprung (D), z. B. einem Zapfen, versehen ist und das zweite Prüfkopfgehäuse (G2) einen von einer der gewünschten Schielwinkelgröße entsprechenden Stelle seiner Führungsflächen ausgehenden, radial verlaufenden Einschnitt (C ; C1 bis C5) aufweist, der den Zapfen aufnimmt, genau auf dessen Abmessungen abgestimmt ist und somit die Schielwinkelposition spielfrei festlegt.

15. Spezial-Windelprüfkopf zur Ultraschallprüfung nach einem der Ansprüche 1 bis 14, dadurch gekennzeichnet, daß das zweite Prüfkopfgehäuse (G2) in einer die Prüfkopfbezugsachse (h) rechtwinklig kreuzenden zweiten Hauptachse (k) und an seinen einander gegenüberliegenden beiden Seitenwangen mit je einem Lagerzapfen (Z1, Z2) zur kardanischen Lagerung an einer Prüfkopfhalterung versehen ist.

16. Spezial-Winkelprüfkopf zur Ultraschallprüfung nach Anspruch 8 oder 9, dadurch gekennzeichnet, daß die Niederhaltefeder (15) mit ihrem eingespannten Ende mittels einer auf dem Spannschraubenschaft sitzenden Abstandshalte-Buchse (18) oberhalb der Deckfläche des Grundkörpers (10) bzw. seines Deckels (16) gehalten ist.

17. Spezial-Winkelprüfkopf zur Ultraschallprüfung nach einem der Ansprüche 1 bis 13, sowie 15 oder 16, dadurch gekennzeichnet, daß der Grundkörper (10) bzw. die Prüfkopf-Subanordnung (PK1) an ihrem Außenumfang mit einer Zahnteilung und das zweite Prüfkopfgehäuse (G2) an seinen Führungsflächen mit einer dazu passenden Gegenzahnteilung (26) versehen sind, so daß der Schielwinkel entsprechend der Zahnteilung durch Verdrehen der Prüfkopf-Subanordnung (PK1) zum zweiten Prüfkopfgehäuse (G2) in Winkelschritten, von z. B. 5°, veränderbar und festlegbar ist.

18. Spezial-Winkelprüfkopf zur Ultraschallprüfung nach einem der Ansprüche 3 bis 6, dadurch gekennzeichnet, daß die Mündungen der Durchgangsbohrungen (B1, B2) mit dem bodenseitigen Ringspalt (12) für die Ankopplungsflüssigkeit über etwa radial verlaufende Verbindungskanäle (23) kommunizieren.

**Claims**

1. A special inclined probe head for ultrasonic testing comprising at least one ultrasonic oscillator (1) which in a housing arrangement (2) is adjusted and secured on a wedge-shaped carrier body (3), which in particular consists of plexiglass, by employing attenuating means (4), in such a manner that the ultrasound beam (5) of the ultrasonic oscillator impinges on the test sample surface at an acoustic irradiation angle $\alpha \neq 0$, relative to the perpendicular line (probe head normal n) drawn at the incidence point of the beam on the test sample upper surface (6.0), and that the ultrasound beam further impinges on the test sample upper surface at an angle of skew $\delta$ which is the angle between the probe head main axis (probe head reference axis h) and the ultrasound beam when viewed from above in the direction of the perpendicular to the probe head, where $0 \leq \delta \leq 360°$ characterised in that the special inclined probe head (PK) consists of a probe head sub-assembly (PK1) which is a premanufactured unit and whose ultrasound oscillator (1) is secured within an assigned first probe head housing (G1) at a predetermined acoustic irradiation angle ($\alpha$), and consists of a second probe head housing (G2) which accommodates the probe head sub-assembly (PK1) and within which the probe head sub-assembly (PK1) is secured at least one predetermined angle of skew ($\delta$) in order to form the overall arrangement of the special inclined probe head (PK), so that from a plurality of probe head sub-assemblies (PK1) having the same acoustic irradiation angle ($\alpha$) special inclined probe heads (PK) with different predetermined angles of skew can be produced by assembling the former together with further probe head housings (G2) in a different relation of the angle of skew.

2. A special inclined probe head for ultrasonic testing as claimed in Claim 1, characterised in that the first probe head housing (G1) has a cylindrical fundamental body (10) which is open at the base and through whose base opening (10.1) the carrier body (3) protrudes by means of a coupling surface (3.1), that the second probe head housing (G2) has cylindrical guide surfaces (11.1), which correspond to the outer periphery of the cylindrical fundamental body (10), base sliding surfaces (11.2) and seats (11.3) which are spaced in the axial direction of the probe head, and that the probe head sub-assembly (PK1) with the cylindrical outer periphery of the fundamental body (10) can be inserted into the guide surfaces (11.1) of the second probe head housing (G2) by adjusting the predetermined rotational relation of the angle of skew, and can engage the seats (11.3) with frontal annular shoulder surfaces (10.3) by forming an annular gap (12) for coupling fluid at the base, and can be locked in this inserted position.

3. A special inclined probe head for ultrasonic testing as claimed in Claim 2, characterised in that the second probe head housing ·(G2) is a prismatic rectangular body which has a central cylindrical opening for the guide and seating surfaces (11.1, 11.3) and that in its corner regions (E1 to E4) are arranged at least two penetrating bores (B1, B2) having upwardly protruding sockets (R1, R2) or nipples for the connection of supply lines for coupling fluid.

4. A special inclined probe head for ultrasonic testing as claimed in Claim 3, characterised in that the second probe head housing (G2) has a square outline.

5. A special inclined probe head for ultrasonic testing as claimed in Claim 3 or 4, characterised in that the sockets (R1, R2) are arranged so as to be diagonally opposite one another.

6. A special inclined probe head for ultrasonic testing as claimed in one of Claims 2 to 5, characterised in that the seats (11.3) of the second probe head housing (G2) are positioned on an annular shoulder which extends round as an inner collar and have an axial spacing (a1) from the base sliding surfaces (11.2) and the test sample upper surface (6.0) and that the sum of the annular shoulder height (a2) of the fundamental body (10) and the thickness (a3) of the base (3.0) of the carrier body which protrudes from the fundamental body (10) and has the coupling surface (3.1) equals said axial distance (a1), so that a flush joint is formed between the base sliding surfaces (11.2) and the coupling surface (3.1).

7. A special inclined probe head for ultrasonic testing as claimed in one of Claims 2 to 6, characterised in that on its upper side the fundamental body (10) is sealed and screened by a cover (16) so as to be impermeable to liquid.

8. A special inclined probe head for ultrasonic testing as claimed in one of Claims 2 to 7, characterised in that the probe head sub-assembly (PK1) is held against the seats (11.3) by at least one retaining spring (15) which presses onto its upper side or its cover (16), and that a clamping screw (14) of the retaining spring (15) is anchored in a tapped blind hole (13) in the region of a corner (E1 and E2) of the second probe head housing (G2) which is free from through-bores for coupling fluid.

9. A special inclined probe head for ultrasonic testing as claimed in Claim 8, characterised in that the retaining spring (15) is designed as a protruding leaf spring which by means of a spherical part (15.1) of its free end bears centrally upon the upper side of the probe head sub-assembly (PK1), and by means of a bore in its other end it is positioned on the shaft of the clamping screw (14) so as to be capable of being tightened.

10. A special inclined probe head for ultrasonic testing as claimed in one of Claims 2 to 9, characterised in that the probe head sub-assembly (PK1) is only surrounded by the second probe head housing (G2) over a part of its height, and that at least one connecting plug socket (A1, A2) for the ultrasound oscillator (1) is secured in the wall of the projecting free casing region of the fundamental body (10).

11. A special inclined probe head for ultrasonic testing as claimed in Claim 10, characterised in that at least two parallel connecting plug sockets (A1, A2) are secured at two different points of the periphery of the fundamental body such that depending on the angle of skew when the one plug socket (A1 or A2) is covered, the other (A2 or A1) is still accessible.

12. A special inclined probe head for ultrasonic testing as claimed in Claim 11, characterised by a subtended angle at the centre between the radially oriented axes of the plug sockets (A1, A2) of approximately 120°.

13. A special inclined probe head for ultrasonic testing as claimed in one of Claims 1 to 12, characterised in that the supporting body base (3.0) which in particular is of circular disk shape, has a mark (d1), e. g. a notch, on its periphery in order to mark the reference axis of the probe head or the $\delta = 0°$ position, and that in its lower peripheral region the fundamental body (10) carries a corresponding counter-mark (d2), wherein the mark (d1) and the counter-mark (d2) coincide in the assembled state of the probe head sub-assembly (PK1).

14. A special inclined probe head for ultrasonic testing as claimed in Claim 13, characterised in that the peripheral point of the countermark (d2) the fundamental body (10) is further provided with a radially oriented projection (D), e. g. a pin, and the second probe head housing (G2) has a radially extending notch (C ; C1 to C5) which originates at a point on its guide surfaces which corresponds to the required angle of skew and which notch houses the pin, is accurately matched to the dimensions thereof and thus determines the position of the angle of skew without play.

15. A special inclined probe head for ultrasonic testing as claimed in one of Claims 1 to 14, characterised in that the second probe head housing (G2) is respectively provided with a bearing pin (Z1, Z2) on its two lateral cheeks which are arranged opposite one another for gimbal mounting on a probe head holder about a second principal axis (k) which intersects the probe head housing axis (h) at right angles.

16. A special inclined probe head for ultrasonic testing as claimed in Claim 8 or 9, characterised in that the retaining spring (15) has its clamped end secured above the top surface of the fundamental body (10) or its cover (16) by means of a spacing sleeve (18) which is positioned on the shaft of the tightening screw.

17. A special inclined probe head for ultrasonic testing as claimed in one of Claims 1 to 13, and 15 or 16, characterised in that on their outer periphery the fundamental body (10) or the probe head sub-assembly (PK1) is provided with teeth and on its guide surfaces the second probe head housing (G2) is provided with matching counter-teeth (26), so that the angle of skew can be adjusted and determined in accordance with the tooth pitch by rotating the probe head sub-assembly (PK1) relative to the probe head housing (G2) in angular steps of e. g. 5°.

18. A special inclined probe head for ultrasonic testing as claimed in one of Claims 3 to 6, characterised in that the openings of the through-bores (B1, B2) communicate with the annular gap (12) for the coupling fluid which is arranged on the base side, by means of approximately radially extending connecting channels (23).

## Revendications

1. Palpeur à angle spécial pour le contrôle ultrasonore, comprenant au moins un émetteur d'ultrasons (1), qui est disposé de façon ajustée et est fixé dans un dispositif formant boîtier (2), sur une pièce constituant un support (3) en forme de coin, en particulier en verre acrylique, et avec utilisation de moyens d'amortissement (4), de manière que le rayon ultrasonore (5) de l'émetteur d'ultrasons tombe sur la surface de la pièce à contrôler sous un angle d'irradiation acoustique $\alpha \neq$ zéro, par rapport à la perpendiculaire abaissée dans le point d'incidence du rayon sur la surface (6.0) de la pièce à contrôler (normale du palpeur n), et de manière que, en outre, le rayon ultrasonore tombe sur la surface de la pièce à contrôler sous un angle bigle $\delta$ qui est défini par l'angle formé entre un axe principal du palpeur (axe de référence h du palpeur) et le rayon ultrasonore, dans une vue en plan du palpeur prise en direction de la perpendiculaire, étant entendu que $0 \leq \delta \leq 360°$, caractérisé en ce que le palpeur à angle spécial (PK) est constitué d'un sous-ensemble de palpeur (PK1), formant une unité préfabriquée, dont l'émetteur d'ultrasons (1) est fixé sous un angle d'irradiation $\alpha$ préfixé dans un premier boîtier de palpeur (G1) correspondant, ainsi que d'un second boîtier de palpeur (G2), recevant le sous-ensemble de palpeur (PK1), second boîtier dans lequel ce sous-ensemble (PK1) peut être fixé sous au moins un angle bigle $\delta$ préfixé, en vue de la formation de l'ensemble du palpeur à angle spécial (PK), si bien que, à partir de plusieurs sous-ensembles de palpeur (PK1) présentant chacun le même angle d'irradiation $\alpha$, on peut, par leur assemblage avec d'autres boîtiers de palpeur (G2) sous des angles bigles différents, réaliser des palpeurs à angle spécial (PK) présentant différents angles bigles préfixés.

2. Palpeur selon la revendication 1, caractérisé en ce que le premier boîtier (G1) présente un corps de base cylindrique (10) qui est ouvert du côté du fond, à travers l'ouverture de fond (10.1) duquel le support (3) fait saillie par une surface de couplage (3.1), que le second boîtier (G2) présente des surfaces de guidage cylindriques (11.1) correspondant à la périphérie extérieure du corps de base cylindrique (10), des surfaces de glissement inférieures (11.2), de même que des surfaces d'appui (11.3) situées à distance de ces dernières dans le sens de l'axe du palpeur, et que le sous-ensemble (PK1) peut être inséré, dans les surfaces de guidage (11.1) du second boîtier (G2) par la périphérie extérieure cylindrique du corps de base (10), avec établissement de la relation en rotation préfixée pour l'angle bigle, et que le sous-ensemble, par des surfaces frontales (10.3) formant un épaulement annulaire, peut être appliqué contre les surfaces d'appui (11.3), avec formation, du côté du fond, d'une fente annulaire (12) pour du liquide de couplage, et peut être arrêté à cette position d'insertion.

3. Palpeur selon la revendication 2, caractérisé en ce que le second boîtier (G2) est un corps rectangulaire prismatique qui présente une ouverture cylindrique centrale pour les surfaces de guidage et d'appui (11.1, 11.3), et que, dans ses zones d'angle (E1 à E4), il présente au moins deux trous traversants (B1, B2) avec des tubulures (R1, R2) ou des raccords faisant saillie vers le haut et servant au raccordement de canalisations d'amenée pour un liquide de couplage.

4. Palpeur selon la revendication 3, caractérisé en ce que le second boîtier (G2) possède, en plan, une forme carrée.

5. Palpeur selon la revendication 3 ou 4, caractérisé en ce que les tubulures (R1, R2) sont situées diagonalement l'une en face de l'autre.

6. Palpeur selon une des revendications 2 à 5, caractérisé en ce que les surfaces d'appui (11.3) du second boîtier (G2) sont disposées sur un épaulement annulaire semblable à un collet intérieur périphérique et sont espacées des surfaces de glissement inférieures (11.2) respectivement de la surface (6.0) de la pièce à contrôler d'une distance axiale (a1) et que la somme de la hauteur (a2) de l'épaulement annulaire du corps de base (10) et de l'épaisseur (a3) du pied (3.0) du support, faisant saillie du corps de base (10) et présentant la surface de couplage (3.1), est égale à ladite distance axiale (a1), de sorte que les surfaces de glissement inférieures (11.2) affleurent la surface de couplage (3.1).

7. Palpeur selon une des revendications 2 à 6, caractérisé en ce que le corps de base (10) est fermé étanche au liquide et blindé, en haut, par un couvercle (16).

8. Palpeur selon une des revendications 2 à 7, caractérisé en ce que le sous-ensemble (PK1) est maintenu contre les surfaces d'appui (11.3) par au moins un ressort de maintien (15), pouvant être bandé et exerçant une pression sur le côté extérieur ou sur le couvercle (16) du sous-ensemble, et qu'une vis de serrage (14) du ressort de maintien (15) est ancrée dans un trou borgne fileté (13), dans la zone d'un angle (E1 ou E2) exempt de trou traversant pour le liquide de couplage du second boîtier (G2).

9. Palpeur selon la revendication 8, caractérisé en ce que le ressort de maintien (15) est un ressort-lame prébombé qui s'applique par une partie bombée (15.1) de son extrémité libre au milieu contre le côté supérieur du sous-ensemble (PK1) et qui est enfilé par un trou de son autre extrémité sur la tige de la vis de serrage (14), de manière à pouvoir être serré par cette vis.

10. Palpeur selon une des revendications 2 à 9, caractérisé en ce que le sous-ensemble (PK1) est seulement entouré sur une partie de sa hauteur par le second boîtier (G2) et qu'au moins une douille de connecteur à enfichage (A1, A2) pour l'émetteur à ultrasons (1) est fixée dans la partie libre débordante de la paroi latérale du corps de base (10).

11. Palpeur selon la revendication 10, caractérisé en ce qu'au moins deux douilles de connecteur à enfichage (A1, A2), branchées en parallèle, sont fixées à deux endroits différents de la périphérie du corps de base, sur celui-ci, de manière que lorsque l'une des douilles (A1 ou A2) est couverte, par suite du choix d'un angle bigle déterminé, l'autre douille (A2 ou A1) reste encore accessible.

12. Palpeur selon la revendication 11, caractérisé en ce que l'angle au centre entre les axes, orientés radialement, des douilles de connecteur (A1, A2) est d'environ 120°.

13. Palpeur selon une des revendications 1 à 12, caractérisé en ce que le pied (3.0) du support, ayant en particulier la forme d'un disque circulaire, présente, à sa périphérie, un repère (d1), une entaille par exemple, pour l'indication de l'axe de référence du palpeur, respectivement de la position où l'angle bigle $\delta$ = 0°, et que le corps de base (10), sur la partie inférieure de sa périphérie, porte un repère antagoniste correspondant (d2), le repère (d1) et le repère antagoniste (d2) ayant été amenés à coïncider à l'état monté du sous-ensemble (PK1).

14. Palpeur selon la revendication 13, caractérisé en ce que le corps de base (10) présente, en outre, à l'endroit de sa périphérie portant le repère antagoniste (d2), une entaille (D) orientée radialement, un tenon par exemple, et que le second boîtier (G2) présente une encoche (C ; C1 à C5), s'étendant radialement à partir d'un point de ses surfaces de guidage correspondant à la grandeur désirée de l'angle bigle, encoche qui reçoit le tenon, qui est ajustée exactement aux dimensions de ce tenon et qui fixe par conséquent sans jeu la position correspondant à l'angle bigle voulu.

15. Palpeur selon une des revendications 1 à 14, caractérisé en ce que le second boîtier (G2) est muni de deux tourillons (Z1, Z2) sur un second axe principal (k) qui coupe à angle droit l'axe de référence (h) du palpeur, un tourillon sur chacune de ses deux joues latérales mutuellement opposées, en vue de la suspension au cardan dans un support de palpeur.

16. Palpeur selon la revendication 8 ou 9, caractérisé en ce que le ressort de maintien (15) est maintenu, par son extrémité serrée et au moyen d'une douille-entretoise (18) enfilée sur la tige de la vis de serrage, au-dessus de la surface de dessus du corps de base (10) ou de son couvercle (16).

17. Palpeur selon une des revendications 1 à 13, et 15 ou 16, caractérisé en ce que le corps de base (10), respectivement le sous-ensemble (PK1), présente à sa périphérie extérieure une division dentée et le second boîtier (G2) est pourvu d'une division dentée antagoniste (26) correspondante à ses surfaces de guidage, de manière que l'angle bigle, suivant la division dentée, puisse être ajusté et fixé, par la rotation du sous-ensemble (PK1) par rapport au second boîtier (G2), par des pas angulaires de 5° par exemple.

18. Palpeur selon une des revendications 3 à 6, caractérisé en ce que les embouchures des trous traversants (B1, B2) communiquent, par des canaux de liaison (23) s'étendant à peu près radialement, avec la fente annulaire (12) formée dans le fond pour le liquide de couplage.

FIG 1

FIG 2

FIG 5

FIG 4

FIG 3

FIG 6

FIG 7

FIG 8

FIG 9

FIG 11

FIG 10

$\delta_3 = 46,5°$

$\delta_4 = 74,5°$

FIG 12

FIG 13

FIG 15

FIG 14

FIG 16